# EUROPEAN PATENT APPLICATION

(11) **EP 2 662 820 A1**
(43) Date of publication of application: **13.11.2013**
(21) Application number: 13166074.8
(22) Date of filing: 30.04.2013
(51) Int. Cl.: G06Q 40/04, G06Q 40/06

(54) **A robust position detection, cause-and-effect and rule determinants to govern excessive risks for global regulatory compliance**

(30) Priority: 07.05.2012 US 201213465292
(71) Applicant: Accenture Global Services Limited, Dublin 4 (IE)
(72) Inventor: Sen, Prabir, Glenview, IL 60025 (US); Mayberry, Trent, Brighton, Victoria 3186 (AU)
(74) Representative: Boult Wade Tennant

(57) **Abstract**

The robust position detection, cause-and-effect and rule determinants to govern excessive risks for global regulatory compliance (DCRD) method and system detects positions, determines rules to apply to position information, identifies causes and effects of positions, and distributes short position report information to appropriate recipients to govern excessive risks for global regulatory compliance. The DCRD methods and system may be configured to implement a rule engine and reporting solution in order to function as an expert system. The DCRD methods and system detect short positions, and identify cause-effect associated with short positions that form systemic risks. The DCRD methods and system determine rules applicable to the short positions by testing the cause-effect of the short position information in relation to the rules and validates the strategic effect the short positions prior to reporting for the short position information to governance and compliance according to one or more rule criteria.

## Description

### 1. Technical Field.

The present description relates to how to efficiently and effectively implement a way to detect a short position and a naked position, particularly in a liquid market. This description also relates to how to facilitate financial and non-bank financial institutions to achieve regulatory compliance and globally consistent capital and liquidity buffers that weigh systemic and excessive risks appropriately, and discourage pro-cyclical lending behavior.

### 2. Background.

The International Monetary Fund (IMF) introduced a regulatory reform agenda agreed to by G-20 leaders in 2009 to prevent a new cycle of leveraging and excessive risk taking. Investment banks and financial institutions (IBFI) and key markets relied increasingly on short-term, wholesale funding and took on excessive maturity mismatches while failing to build adequate liquid asset buffers. Regulators are introducing requirements for a better understanding and oversight of risks in the investment banking and nonbank financial sector. As a result of implementing the requirements, regulators expect to realize greater transparency about the risks that institutions are taking, and the protections that result by extending the regulatory perimeter to include all systemically important institutions, markets, and instruments.

Currently, no solution exists to monitor the impact and/or effectiveness of the regulatory requirements. Most IBFIs perform ad-hoc position reporting manually for regulators, therefore the ad-hoc position reports are not only error prone, but do not follow uniform reporting standards or metrics. Therefore, the existing systems and methods lack of transparency and limited disclosure of the types and locations of risks made the extent of exposures and potential spillovers difficult to assess. This opacity magnified the shock to confidence as the crisis unfolded. As the financial sector expanded, an increasingly large portion of financial activity did not seem to serve the needs of the real economy.

Short selling is a trading strategy often used to profit from an anticipated decline in the price of a stock or commodity. The practice of short selling assets, includes but is not limited to positions financials, physical and knowledge assets, stocks, derivatives, interests and currencies ("holding types"), borrowed from a third party (usually a broker) with the intention of buying identical assets back at a later date to return to that third party. The short seller's hopes ("position") to profit from a decline in the price of the assets between the sale and the repurchase, based on the seller's expectation to pay less to buy the assets than the seller received on selling the assets. The short seller will incur a loss if the price of the assets rises (as the short seller will have to buy the assets at a higher price than the short seller sold the assets), and there is no theoretical limit to the loss that can be incurred by a short seller. For example, in simple form, an investor borrows 100 shares of XYZ stock that is currently trading at $35 per share and pays a 4% dividend, and sells the shares. Assume that the stock paid a dividend of $1.40 per share before the short seller covered the short. This puts $3,500 in the short seller's margin account, and as a result, $140 will eventually be deducted from the margin account to pay for the dividend. If the price subsequently declines to $30, the investor can buy the shares back for $3,000 to return the borrowed shares, thus covering the short seller's short position, and netting $500 - $140 = $360 from the position. If, however, the price of XYZ stock rises to $40, then the short seller will have to buy back the stock for $4,000, resulting in a net loss of $500 + $140 = $640. Brokerage commissions are also subtracted from any profit or added to any loss. For the same price movement of the stock, the loss from an unfavorable move is much greater than the profit gained from a favorable move. Short sells become extremely complex to analyze for an investment bank when considering transactions involving more than one holding type, more than one country and more than one trading exchange.

A short can be contrasted with the more conventional practice known as "the long" where the holder of the position owns the position and profits if the price of the holding type goes up. In the practice of short-selling a tradable asset of any kind, without first borrowing the position or ensuring that the position can be borrowed, as is conventionally done in a short sale, when the seller does not obtain the shares within the required time frame ("settlement period"), the result is known as a "failure to deliver" ("FTD" or "naked short sale"). The transaction generally remains open until the seller acquires the shares, or the seller's broker settles the position.

Although existing short sale information systems provide short position information associated with multiple positions, and receive the short position information from various sources, existing short sale information systems fail to provide an easy way to detect short positions from other positions and naked positions, particularly in a liquid market.

In 2008, the U.S. Securities and Exchange Commission (SEC) banned "abusive naked short selling" in the United States, as well as some other jurisdictions, as a method of driving down share prices. Failing to deliver shares is legal under certain circumstances, and naked short selling is not per se illegal. In the United States, naked short selling is covered by various SEC regulations which prohibit the practice. Banning naked short selling has allegedly created "phantom" trading that sometimes goes from position to position without connection to any physical shares, and artificially depressed the share price. Moreover, failure to deliver holding types may be done for manipulative purposes to create the impression that the stock is a tight borrow, although the failure to deliver should be seen as a failure to deliver "longs" rather than "shorts."

Existing systems and methods also lack transparency and limited disclosure of the types and locations of risks made assessing the extent of exposures and potential spillovers of short, medium or long positions difficult. This opacity magnified the shock to confidence as the crisis unfolded for the liquidity in the market. Systemic risk such as a risk of disruption to financial services on short positions may be caused by an impairment of all or parts of the short-position transaction process, and has the potential to have serious negative consequences for both 'insider trading' at a micro-level and the real economy at the macro-level.

Because systemic techniques to determine the value at risk, the cause-effect and the speculation of investments involve large numbers of participants with divergent anticipations, external news, stochastic nature and conflicting interests, existing short position information available via current systems and methods remains of limited value to short-selling regulators, governance and compliance practices.

### SUMMARY

The robust position detection, cause-and-effect and rule determinants to govern excessive risks for global regulatory compliance (DCRD) system for presenting short position associated with one or more holding types includes a short position data-mart ("data-mart") for receiving short position information and regulatory rules, using a communications interface, from one or more sources, a rule processing engine in communication with the data-mart. The rule processing engine is operable to determine rules to apply to the short position information, in order to present the short position information according to one or more rule criteria, test and validate the rules by modifying a portion of the short position information associated with the one or more holding types to determine whether a portion of a short sale position is attributable to changes in the rules, and apply the rules to the short position information. The system also includes a cause-effect processor, in communication with the data-mart, operable to apply methods on the short position information, wherein the short position information is arranged according to one or more causal criteria. The rule engine modifies a portion of the short position information associated with the cause-effect on one or more of the holding types when the portion of the short position is attributable to changes in the cause-effect. The system includes a filtering engine operable to remove a portion of the short-sale position information associated with the one or more holding types when the portion of the short sale position information is attributable to pre-determined report criteria, and a reporting engine that generates reports comprising the short position information including the short sale position.

The robust position detection, cause-and-effect and rule determinants to govern excessive risks for global regulatory compliance (DCRD) computer-implemented method for reporting short position information receives position information from data sources, wherein the position information identifies positions of one or more holding types, and wherein the positions are from one or more entities including one or more clients of one or more financial institutions, or the one or more financial institution, or both. The DCRD method detects a short position from the position information, wherein the short position includes levels of thresholds. The DCRD method identifies cause and effect of the short position using the position information, determines inclusion and exclusion rules (the "Rules") comprising rule criteria, applies the inclusion and exclusion rules to the position information, arranges the short position information for analyzing reporting metrics, tests impact on short position reports in relation to the rules, and validates the short position reports according to one or more of the rule criteria. The holding types include a short position in a price discovery process, and for which trading activity makes prices more informationally efficient, a short position in a cost-to-borrow, wherein the cost-to-borrow indicates a cost associated with borrowing money for the short position and the level of thresholds of the short position, a short position in a return predictability, wherein the return predictability indicates a return associated with the short position and the level of thresholds for the short position, a short position in a risk valuation, wherein the risk valuation indicates risks associated with the short position, and value risks and the levels of thresholds for the short position. The levels of thresholds for the short position may range from 0.001 % to 99.999%. The number of the entities may range from 2 to 20. The identified cause of the short position may be causal arbitrage activity of short sellers, wherein the causal arbitrage activity results in faster incorporation of information into prices, cost, return and risks, and wherein the causal arbitrage activity attenuates drift or eliminates drift, and supports a positive role of short sellers in promoting efficiency. The short position is a short-sale position in one or more of the holding types, wherein the identified effect is of the short-sale position and effects liquidity and aggregates micro and macro-economic indicators recognized by governance, compliance, regulators market participants, and independent third parties pertaining to the one or more of the holding types. The identified cause of the short position may include security types, trading strategies and transaction types. The position information may include metrics affected that pertain to the positions. The DCRD method and system may arrange short position information according to one or more report criteria, wherein the report criteria include by topic of display. The DCRD method and system may arrange short position information according to selection criteria by sub-topic. The DCRD method and system may arrange the short position information according to selection criteria including by causal relationships. The DCRD method and system may arrange short position information according to selection criteria including by sub-relationships and/or by directives. The DCRD method and system may determine the inclusion and exclusion rules of the short position information according to rule criteria including by attributes, by parameters, by indicators, and/or by metrics.

The robust position detection, cause-and-effect and rule determinants to govern excessive risks for global regulatory compliance (DCRD) method and system detects positions, determines rules to apply to position information, identifies causes and effects of positions, and distributes short position report information to appropriate recipients to govern excessive risks for global regulatory compliance. The DCRD methods and system may be configured to implement a rule engine and reporting solution in order to function as an expert system. The DCRD methods and system detect short positions, and identify cause-effect associated with short positions that form systemic risks. The DCRD methods and system determine rules applicable to the short positions by testing the cause-effect of the short position information in relation to the rules and validates the strategic effect the short positions prior to reporting for the short position information to governance and compliance according to one or more rule criteria.

The DCRD methods and system may be implemented as a ubiquitous and/or pervasive computing environment. The DCRD methods and system provides continuous queries that exploit highly portable and/or numerous short information processing. The DCRD system is an intelligent expert system integrated with machine-learning classification logic used to forecast scaling as needed and provide adaptive behaviors. The DCRD system analyzes economic factors, such as volatility and price dynamics, for position instruments at a quantum level, for all holding types and represents objects interactions with the behaviors of the positions. The DCRD methods and system include uniquely designed data-marts to handle both internal rules (IBFIs own inclusion/ exclusion rules) and external rules (regulatory inclusion/exclusion rules), and a method to determine strategy and decisions based on internal inclusion/exclusion rules and external inclusion/exclusion rules on short position data. The DCRD method includes a way to test and validate the impact of decisions on position reports based on internal inclusion/exclusion rules and external inclusion/exclusion rules. The DCRD method and system use one or more pattern recognition techniques to determine the underlying mechanisms of short, medium and long positions, the financial volatility of the short, medium and long positions, and whether a risk of insider trading at a very micro-level exists and the impact on the real economy at the macro-level. The DCRD method determines the size of the position (e.g., the volume-value), and the extent to which the same return may be provided as in the event of a naked/failure (e.g., the substitutability of the position). The DCRD method and system provide linkages with other metrics of the analysis process to provide causal inferences (e.g., the cause-effect) of the position data to determine the interconnectedness of the position. The DCRD method provides an audit trail of transactions, and integrates with machine-learning classification logic used to forecast scaling as needed and provide adaptive behaviors. The DCRD method and system forecast returns, volatilities, value-at-risk and return intervals with price movements based on backward induction of interconnectedness. The DCRD method and system automatically generate various position reports using unsupervised learning based on filter definitions required to be submitted to regulators.

The DCRD method and system define systemic risk as a risk of disruption to financial services on short position caused by an impairment of all or parts of the short-position transaction process, and has the potential to have serious negative consequences for both insider trading at a micro-level and the real economy at the macro-level. The DCRD method and system identify criteria of systemic importance including the size (e.g., the volume of financial services provided by the individual component of the financial system), substitutability (e.g., the extent to which other components of the system can provide the same services in the event of a failure), and interconnectedness (e.g., cause-and-effect linkages with other components of the system). Because a systemic technique to determine the value at risk, the cause-effect and the speculation of investments involve large numbers of participants with divergent anticipations, external news, stochastic nature and conflicting interests, the DCRD method and system uses a unique pattern recognition with one or more statistical physics algorithms (e.g., quantum physics) to determine the underlying mechanisms of short, medium, and long positions and the financial volatility of the positions.

Other systems, methods, and features will be, or will become, apparent to one with skill in the art upon examination of the following figures and detailed description. It is intended that all such additional systems, methods, features and be included within this description, be within the scope of the disclosure, and be protected by the following claims.

### BRIEF DESCRIPTION OF THE DRAWINGS

The robust position detection, cause-and-effect and rule determinants to govern excessive risks for global regulatory compliance (DCRD) methods and system may be better understood with reference to the following drawings and description. Non-limiting and non-exhaustive descriptions are described with reference to the following drawings. The components in the figures are not necessarily to scale, emphasis instead being placed upon illustrating principles. In the figures, like referenced numerals may refer to like parts throughout the different figures unless otherwise specified.
Figure 1 shows a system for integrating, analyzing and aggregating short position information.
Figure 2 shows a rule-engine workbench for rule standards, determinants, applications and traceability for short position in a portfolio.
Figure 3 shows a rules display of a rule filter, pending rules and the impact of the pending rules on short position information.
Figure 4 shows a rules display of a rule to determine, interpret and classify regulations for implementation.
Figure 5 shows a cause-effect display of short positions of various holding types.
Figure 6 shows a cause-effect display of short positions within and between holding types.
Figure 7 shows a cause-effect display of short position, analytics and process metrics.
Figure 8 shows a cause-effect display of short position, analytics and impact metrics.
Figure 9 shows a cause-effect display of a full/expanded cause-effect of a position.
Figure 10 shows a rule exceptions display of edit and update rules as exceptions.
Figure 11 shows a selectable reporting variables display.
Figure 12 shows a summary report of a regulator's portfolio.
Figure 13 shows a workflow to apply regulatory changes, inclusion/exclusion rule changes and strategy on changes.
Figure 14 shows a DCRD system configuration.

### DETAILED DESCRIPTION

The principles described herein may be embodied in many different forms. Not all of the depicted components may be required, however, and some implementations may include additional, different, or fewer components. Variations in the arrangement and type of the components may be made without departing from the spirit or scope of the claims as set forth herein. Additional, different or fewer components may be provided.

The system, method and computer-implemented method for detecting short positions from position instruments, may include financial information, physical capital and knowledge capital stocks, futures, derivatives, contracts, interests and currencies (referred to as "holding types" and/or "positions"). The system, method and computer-implemented method identify the causes and effects ("cause-effect") of a short position using the information from various sources, determines and applies inclusion and exclusion rules (the "rules") for reporting the short positions, tests the cause-effect of short position information in relation to rules, and validates the strategic effect of the short position, and report for governance and compliance according to one or more rule criteria.

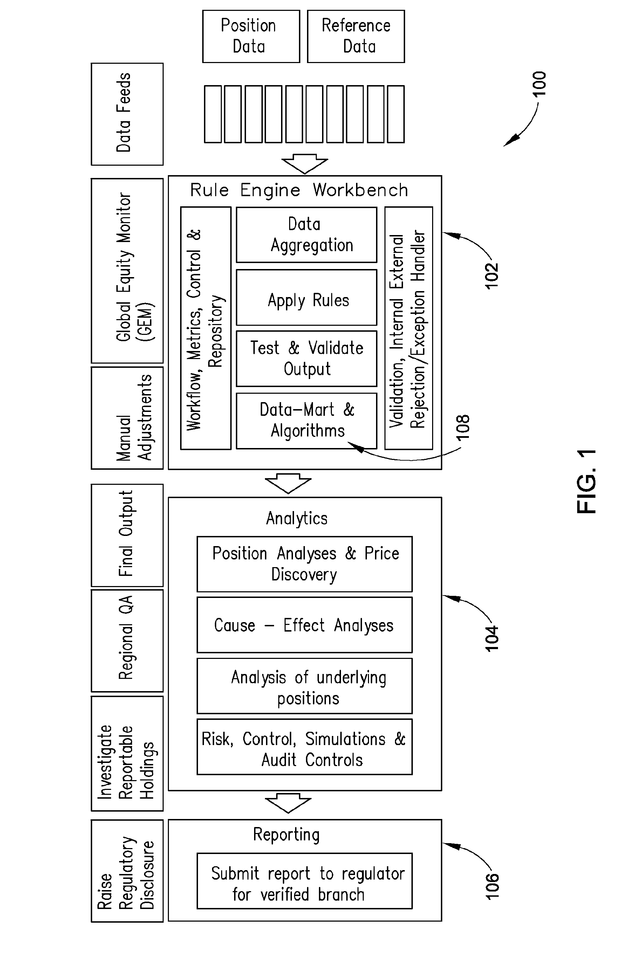

Figure 1 shows a DCRD system configuration 100 for integrating, analyzing and aggregating short position information. The DCRD system 102 detects short position, determines rules, applies rules identifying cause-effect and aggregates short-selling position information. The DCRD system 102 may be operated by a financial institution (e.g., a brokerage firm and/or exchange) to aggregate short-selling position information, and provide the short-selling position information to regulators, clients and/or traders of the financial institution. The clients and/or traders of the financial institution may use the short-selling position information to report the clients' and/or traders' governance and compliance decision-making processes for strategic micro/macro-economic effect.

The DCRD system 102 includes a short position information data-mart 108 may be mapped to an analytics engine 104 that analyzes the short position information by using advanced mathematical and statistical algorithms to apply to the short position information, including, position, references, rules, market, economic, investment and investor behavior information. The analytics engine 104 may implement various methods to measure performance to report governance, and inform clients and/or traders (the "users") of the financial institution. The performance measured may include risk, return, liquidity, and control. The analytics engine 104 may use simulations and audit controls to measure performance before and after a short position to determine whether the short position is found "compliant".

System 102 and analytics engine 104 may use the short position information data-mart 108 in combination with a reporting engine 106. The reporting engine 106 generates reports in a desired format of short-selling position information for various governance, clients and traders, and the reports may be uploaded and/or communicated to desperate sites automatically. For example, the U.S. Security and Exchange Commission (SEC) may require the short position information report in a particular format (e.g., FIX) and Hong Kong Stock Exchange (HKSE) may require an upload of the report in a different format (e.g., XML). Reporting engine 106 arranges the reported data and creates the reports in one or more formats designated by the destination and/or requestor, and may connect to the destination and/or requestor system (e.g., logs into user system) and uploads the reports to the destination and/or requestor system.

The DCRD system 102 uses reference data and position data from data feeds as input to a rule engine workbench. The rule engine workbench uses workflows, metrics, controls and one or more repositories, performs validation, and an internal external rejection and exception handler. The rule engine workbench performs data aggregation, applies rules, tests and validates output, and includes a data mart and algorithms. The DCRD system 102 uses and/or may be implemented as a global equity monitor. The DCRD system 102 may receive manual adjustments from a user to provide final outputs, regional questions and answers, investigate reportable holdings and raise regulatory disclosure. In order to identify reportable short positions, the DCRD system 102 generates analytics including position analyses, price discovery, cause-effect analyses, and analysis of underlying positions, risk, control, simulations and audit controls. The DCRD system 102 generates short positions information that may be submitted to regulators (e.g., verification and investigation branch).

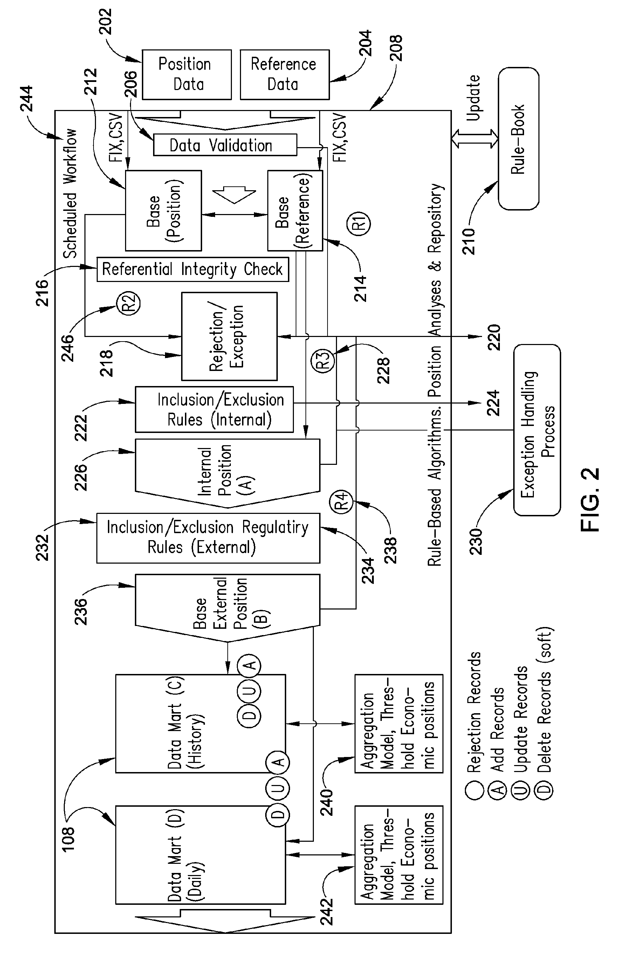

Figure 2 shows a rule-engine workbench 200 for rule standards, determinants, applications and traceability for short positions in a portfolio. System 102 includes a base short position information table 212 that stores short position information received from short position information external sources 202, position reference information external sources 204 and regulatory rule book 210. The short position information may include any information relating to short position transactions of any holding type including position, derivatives, options, futures, currencies, contracts and/or traded instrument. For example, the short position information may include the amount of short position in a particular position, the change from a previous period in the amount of short position in a particular position, the number of short position requests received for a particular position, and the number of settled short position requests for a particular position. The short position information may also include a rate indicator for a position that indicates whether the cost for borrowing a particular position is increasing or decreasing, recall trend information that indicates whether a lender of a particular position has recalled an outstanding loan, and availability information that indicates whether a particular position is available for loan.

System 102 may implement a method of "price discovery information" that indicates the short sellers' role in the price discovery process and the short sellers' trading activity if that makes prices more informationally efficient. System 102 may use distinct approaches to measure the effect of shorting on informational efficiency. The distinct approaches may include constructing transaction-based high-frequency measures of efficiency using the data validation engine for position data (206) and reference data (208), constructing lower-frequency price-delay measures that estimate how quickly prices incorporate public information. The distinct approaches may also include using the post-earnings announcement drift anomaly to measure inefficiency and test whether short sellers influence the magnitude of the inefficiency, and examining short selling around large price movements and price reversals. System 102 may store the data and/or records, rejected through the data validation process (206), in a separate table of the base (position) 212 accessed by analytics engine 104.

System 102 includes a method to determine "cost-to-borrow information" that indicates the cost associated with borrowing a particular position and the level of thresholds for the position. Cost-to-borrow information may include performance indicators (e.g., low, medium, high and very-high). The very-high performance indicator value indicates that a particular position is relatively easy to borrow (and at a relatively low cost). The high, medium and low performance indicator values may indicate that a particular position is progressively more difficult to borrow (and at a relatively higher cost). System 102 designates each position according to the difficulty to borrow associated with the position.

System 102 includes a method to determine "return predictability" that indicates the return associated with a particular short position and level of thresholds for the short position. The return predictability information of the financial institution increases trading of the short positions following positive returns as the financial institution correctly predicts future negative abnormal returns. The increased trading may be attributed to patterns used to control voluntary liquidity provisions and opportunistic risk-bearing by the financial institution. System 102 uses the patterns of return predictability associated with strategies of each of the short positions to identify (e.g., designate) each of the short positions with pattern labels.

System 102 includes a method to determine "risk valuation" that indicates the risks associated with a short position, and value risks and levels of thresholds of the short position. System 102 attributes risk valuation with scenarios including recall, perceived riskiness of a short position, unfavorable tax treatment, unwillingness to bet against companies, and public bias against financial institution impact of the short position valuation. System 102 uses scenarios of risk valuation associated with each of the short position to identify positions (e.g., designate) with the scenario strategies.

System 102 also may include a referential integrity engine 216 that matches the short position information stored in base (position) 212 with reference information stored in base (reference) 214 according to various criteria. For example, short selling position information of "Soda Bottler" may be checked against the trading reference data to ensure data accuracy. System 102 may store, in a separate table base (position) 212, data and/or records that system 102 rejects through referential integrity process 216, accessed by analytics engine 104.

System 102 also includes an internal inclusion and exclusion rules engine 222 that system 102 applies to base (position) 212 according to various criteria. The internal inclusion and exclusion rule engine 222 determines, for each of the requested positions, whether the short position information contains one or more applicable rules. The internal inclusion and exclusion rule engine 222 forwards the short position information associated with those positions in which one or more applicable rules is attributable to a minimum number of entities (e.g., one or more clients of one or more financial institutions and/or the one or more financial institutions). In this way, system 102 maintains the relevance associated with a short position of a client of the financial institution.

The internal inclusion and exclusion rule engine 222 also determines the portion of the retrieved short position information (e.g., total short position in XYZ stock) attributable to each entity involved in corresponding transactions. In order to avoid inadvertently disclosing the identity of a short position, internal inclusion and exclusion rule engine 222 does not forward the requested short position information if internal inclusion and exclusion rule engine 222 cannot attribute one or more of the rules to a single entity (e.g., a client of a financial institution or the financial institution). System 102 may use a threshold percentage that ranges from 0.001 to 99.999 percent. The users may set a threshold percentage based on a count of positions on which system 102 attributes one or more internal inclusion and exclusion rules. Thus, if the threshold percent of the short position information associated with short position transactions in XYZ stock is attributable to a single entity, then internal inclusion and exclusion rule engine 222 may flag the XYZ short position information when storing the XYZ short position information in the internal position (A) 226 and send an alert to the user.

When a user (e.g., a client of a financial institution or the financial institution) requests (via a user interface 224) internal inclusion and exclusion rules pertaining to certain positions, internal inclusion and exclusion rule engine 222 receives the request and retrieves the relevant short position information from base (position) 212. For example, when a client requests the total short position for XYZ stock the internal inclusion and exclusion rule engine 222 retrieves from base (position) 212 the amount of XYZ shares sold short for each short position in XYZ stock. Internal inclusion and exclusion rule engine 222 internal inclusion and exclusion rule engine 222 prior to delivering the requested information to a final report. The internal inclusion and exclusion rule engine 222 may flag the requested short position information for use in reports provided to the client if the short position information reflects one or more rules attributed to a minimum number of entities (e.g., configurable by the system 102) when storing the short position information in the internal position (A) 226 and sends an alert to the user.

System 102 may configure the minimum number of entities (e.g., one or more clients of one or more financial institutions and/or the one or more financial institutions) to range from two to twenty. System 102 may alternatively configure the minimum number of entities to equal ten. Accordingly, if system 102 attributes the short position information associated with short transactions in XYZ stock to three entities (e.g., three clients of the institution that system 102 attributes responsibility for the short position activity in XYZ stock), then internal inclusion and exclusion rule engine 222 flags the XYZ short position information while storing the short position information in internal position (A) 226 and sends an alert to the user (e.g., three entities).

System 102 also includes an external inclusion and exclusion regulatory rules engine 232 that applies external inclusion and exclusion regulatory rules to internal position (A) 226 according to various criteria. The external inclusion and exclusion regulatory rule engine 232 determines, for each of the requested positions, whether the short position information identifies one or more applicable rules attributable to the short position information. The external inclusion and exclusion regulatory rule engine 232 forwards to the configured number of entities the short position information associated with those positions in which the one or more applicable rules are attributable. In this way, the relevance associated with a short position of a client of a financial institution is maintained.

The external inclusion and exclusion regulatory rule engine 232 also determines the percentage of the retrieved short position information (e.g., total short position in XYZ stock) attributable to each entity involved in corresponding transactions. In order to avoid inadvertently disclosing the identity (e.g., client and/or financial institution) of a short position, internal inclusion and exclusion regulatory rule engine 232 does not forward the requested short position information if the internal inclusion and exclusion regulatory rule engine 232 cannot attribute one or more of the rules to a single entity (e.g., a client of a financial institution or the financial institution). System 102 may use a threshold percentage that ranges from 0.001 to 99.999 percent. The users may set a threshold percentage based on a count of positions on which system 102 attributes one or more internal inclusion and exclusion rules. Thus, if the threshold percent of the short position information associated with short position transactions in XYZ stock is attributable to a single entity, then internal inclusion and exclusion regulatory rule engine 232 may flag the XYZ short position information when storing the XYZ short position information in the internal position (B) 236 and send an alert to the user.

When a user requests (via a user interface 234) the internal inclusion and exclusion regulatory rules pertaining to certain positions, external inclusion and exclusion regulatory rule engine 232 receives the modified request and retrieves the relevant short position information from base (position) 212. For example, the client (e.g., user) may want the total short position for XYZ stock in which case external inclusion and exclusion regulatory rule engine 232 retrieves from internal position (A) 226 the amount of XYZ shares sold short for each short position in XYZ stock. Prior to delivering the requested information to the final report, external inclusion and exclusion regulatory rule engine 232 determines the number of unique entities (e.g., one or more clients of one or more financial institutions and/or the one or more financial institutions). The external inclusion and exclusion regulatory rule engine 232 may flag the requested short position information for use in reports provided to the client if the short position information reflects one or more rules attributed to a minimum number of entities while storing the short position information in base external position (B) 236, and send an alert to the user (e.g., financial institution).

System 102 may configure the minimum number of entities to range from two to twenty. System 102 may alternatively configure the minimum number of entities to equal ten. Accordingly, if system 102 attributes the short position information associated with short transactions in XYZ stock to three entities (e.g., three clients of the institution that system 102 attributes responsibility for the short position activity in XYZ stock), then external inclusion and exclusion regulatory rule engine 232 flags the XYZ short position information while storing the XYZ short position information in base external position (B) 236 and sends an alert to the user.

System 102 also includes short position information data-mart 108 which stores both historical and daily data. When external inclusion and exclusion regulatory rule engine 232 determines for each of the requested positions whether the short position information contains one or more applicable rules, system 102 flags the short position information associated with those positions attributable to the minimum number of entities as either "Add", "Update" or "Delete" records. System 102 stores the short position information in the short position information data-mart 108. In this way, system 102 maintains the integrity and relevance associated with the short position of a client of the financial institution.

Financial institutions may operate system 102 to provide short position information to the users of the financial institutions. System 102 may present short position information in various formats and in varying levels of detail. For example, a financial institution may desire to provide only the level of detail that is necessary for the governance to make compliance decisions while also maintaining the appropriate level of rules associated with the information. Alternatively, the financial institution may provide affiliated traders of the financial institution with a greater level of detailed short position information while maintaining the confidentiality for other clients of the financial institution. The financial institution may configure system 102 by selecting the type of information that a user may request and receive by modifying the selection (e.g., filters) presented to the "history" interface 240 and "daily" interface 242 (e.g. 240 and 242 interfaces to an aggregation model and thresholds economic positions), respectively.

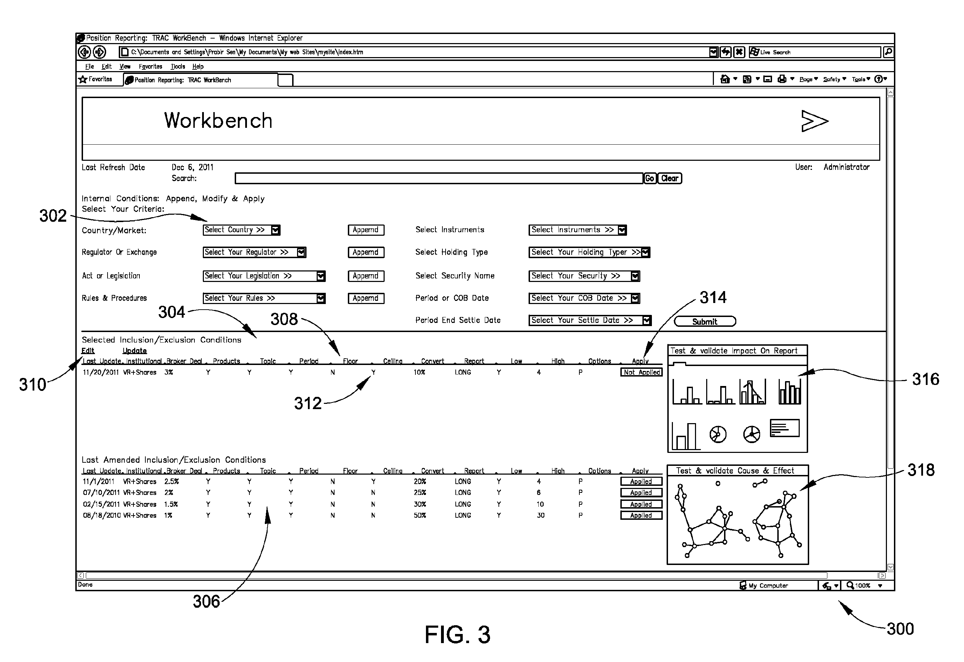

Figure 3 shows a rules display 300 of a rule filter, pending rules and the impact of the pending rules on short position information. Rules display 300 may be presented by information data-mart 108. The short position information displayed in rules display 300 provides a set of criteria as may be specified by internal inclusion and exclusion engine 222. Rules display 300 includes a set of criteria (e.g., country/market, instruments, regulator or exchange, act or legislation, rules and procedures, holding type, security name, period or COB (Close of Business) date selectable using drop-down boxes 302 in which a client account portfolio may be selected. The COB date is the date when the transaction is committed, and the period end settle date is the date when the security is settled or delivered. When a client account portfolio is selected, internal inclusion and exclusion engine 222 retrieves from base (position) 212 the rules that may be applied 304 (e.g., inclusion and exclusion conditions including institutional, broker deal, products, topic, period, floor, ceiling, convert, report, low, high, options, apply) and previously applied 306 rules (e.g., inclusion and exclusion conditions including institutional, broker deal, products, topic, period, floor, ceiling, convert, report, low, high, options, apply). Rules display 300 includes fields for displaying a variety of rules related information, including the attributes of the rules designated as attribute 308, a user selectable option, edit /update 310, usable to modify each rule associated with each of the positions, parameterized fields 312 for displaying the parameters for each attribute of the rule, and an indicator field 314 that indicates whether the rule is applied or not applied on a position. Internal inclusion and exclusion rule engine 222 receives the rules for each position from a rule book source 210 (e.g., real-time rule book source) to automatically identify the rules for inclusion in the rules display 300.

Rules display 300 includes a report of charts and descriptions for impacts on short position report information 316. Impacts on short position report information 316 may show test and validation results for various metrics such as threshold levels, liquidity ratio, operational risks, and returns predictability. Impacts on short position information impacts report 316 may show test and validation results when a rule is applied to short position information stored in the base (position) 212 and rejection/exception 218, for each user, and the percent change in the short balance between the time periods for the short positions. Impacts on short position report information 316 displays metrics for all or a portion of short position information for a financial institution, or metrics for all or a portion of short positions aggregated from multiple financial institutions. As changes occur to attribute 308, parameter 312 and the indicator 314 of internal inclusion and exclusion rule engine 222, the impacts on short position information impacts report 316 displays the change results to users affiliated with the financial institution.

Rules display 300 also includes diagrams and descriptions displaying the impact on cause-effect of short position information 318. Impacts on cause-effect of short position information 318 may show test and validation results for the cause-effect of short positions as the user changes the attributes of the rules applied to the short position information stored in base (position) 212 and rejection/exception 218, for each user, and the percent change in the short balance between the time for the short positions. Impacts on cause-effect of short position information 318 displays cause-effect for all or a portion of short position information for a financial institution or all or a portion of short positions aggregated from multiple financial institutions. As changes occur to attribute 308, parameter 312 and the indicator 314 of internal inclusion and exclusion rule engine 222, the impact on cause-effect of short position information 318 displays the change results to users affiliated with the financial institution.

Rules display 300 displays the rules applied in an arranged order according to the changes to positions over multiple time periods. System 102 provides a graphical user interface (GUI) mechanism for the user to sort the positions based on any rule attributes contained in rules display 300 and/or any other attribute information. The information provided in each of the attribute fields presented by the rules display 300 may include information representative of an absolute change (increase/decrease), a percentage change or a rate of change in the parameter represented by the attribute field. The information provided in the rules display 300 may be sorted and displayed based on the information in one or more of the provided fields.

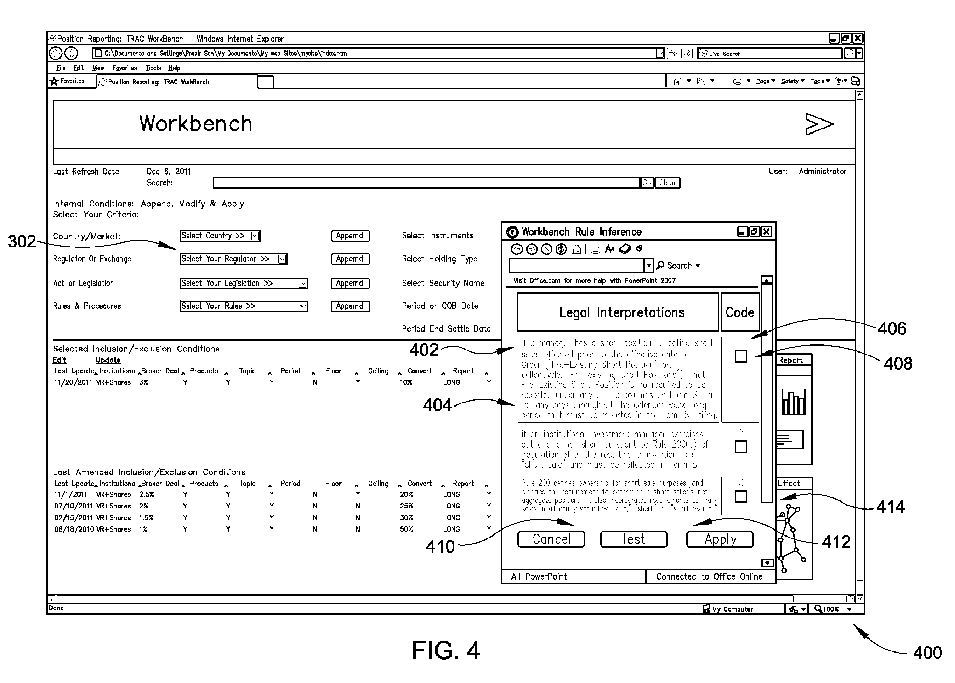

Figure 4 shows a rules display 400 of a rule to determine, interpret and classify regulations for implementation. Rules display 400 displays rules for recently executed short positions and processor a user selectable pop-up window rules interface 402 that displays a rule in a description box 404 and legal interpretation of the rule 406 and parameters applied on the rule 408 (e.g., code 1, code 2, code 3) with reference information that may be stored in short position information in base (position) 212 and rejection/exception 218 based on the rule book source 210. When a user of system 102 requests (via a client interface 224) short position information pertaining to certain positions, internal inclusion and exclusion rule engine 222 receives the request and retrieves the relevant short position regulatory information from base (position) 212.

For example, when the user requests the total short position for XYZ stock internal inclusion and exclusion rule engine 222 retrieves, from the short position rule stored in base (position) 212 and position information database base (position) 212 and rejection/exception 218, the amount of XYZ shares sold short for each short position in XYZ stock. Prior to delivering the requested information to the user, internal inclusion and exclusion rule engine 222 determines the number of unique entities (e.g., clients of the financial institution and/or the financial institution) on whose behalf the financial institution executed the retrieved short position transactions. System 102 may configure the minimum number of entities to range from two to twenty. System 102 may alternatively configure the minimum number of entities to equal ten. Accordingly, if system 102 attributes the short position regulatory information associated with short transactions in XYZ stock to three entities (e.g., three clients of the institution that system 102 attributes responsibility for the short position activity in XYZ stock), then internal inclusion and exclusion rule engine 222 forwards the XYZ short position information to the requesting user.

Rules interface 402 may include a description box 404 that describes one or more rules used as a filter for the positions to be displayed in the rules display 400. For example, if a user selects a rule code box 406, then the rules interface 402 displays those positions included in the rule. Rules display 400 displays pending short sale information for all positions (e.g., across all rules) when "all" is entered into code box 406.

Rules interface 402 may display rules in an order according to the rule contained in code box 406. Rules interface 402 includes a select box 408 that the user may use to sort the positions based on one or more rules contained in the rules interface 402 or any other information. Additionally, the user may sort the positions over user specified date ranges (e.g., rather than using the default range of the five prior trading days).

The user may select or cancel rules in an order according to the rule contained in cancel box 410. The user may use the user selectable cancel box 410 to cancel a rule already applied on the positions based on one or more rules contained in the rules interface 402 or any other information. Additionally, the user may cancel a rule on positions over any date range specified rather than using the default range of the five prior trading days. The user may select or cancel rules in an order according to the rule contained in test box 412. The user may use the user selectable test box 412 to test the rule already applied on the positions based on one or more rules contained in the rules interface 402 or any other information. Additionally, the user may test the rule on positions over user specified date ranges (e.g., rather than using the default range of the five prior trading days).

The user may select or cancel rules in an order according to the rule contained in apply box 414. The user may use the user selectable apply box 414 to apply the rule already applied on the positions based on rule contained in the rules interface 402 or any other information. Additionally, the user may apply the rule on positions over user specified date ranges (e.g., rather than using the default range of the five prior trading days).

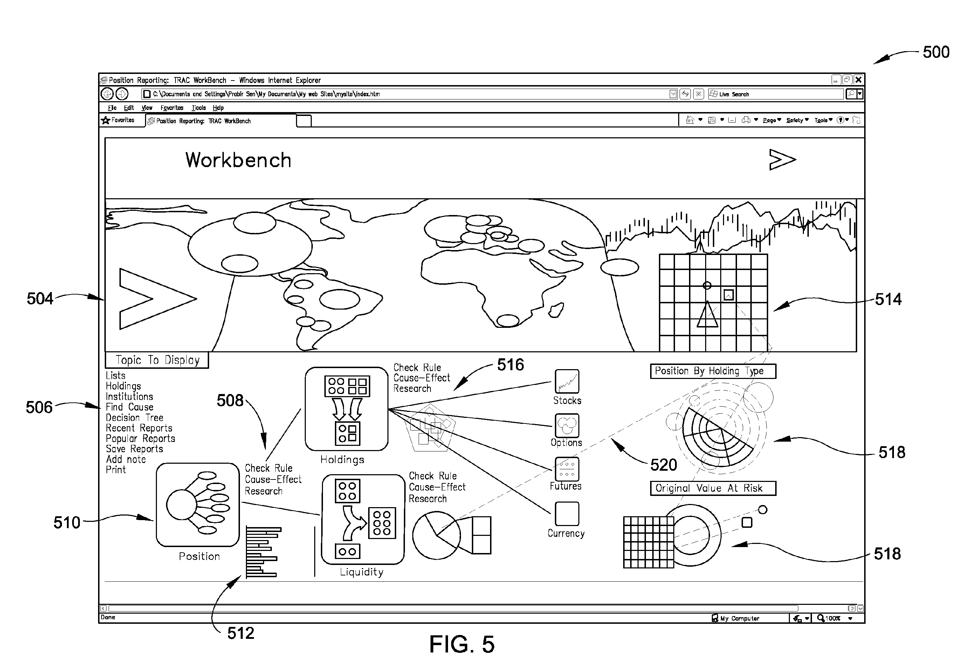

Figure 5 shows a cause-effect display 500 of short positions of various holding types. The cause-effect display 500 is multidimensional and includes a global panel 504 that displays the quantity of shorted shares that have been executed at various geographic markets, and a topic of display 506 that displays topics (e.g., lists, holdings, institutions, find cause, decision tree, percent reports, popular reports, save reports, add note, and print) by which the information of the listed positions may be arranged. The cause-effect display 500 may include a linked-topic 508 that displays the linked-topics such as check rules, cause-effect and research by which related information to be displayed for the short positions at the financial institution over a user configurable trading range.

Cause-effect display 500 provides the user the option to identify detail by groups of topics or subgroups. For example, a holding may be selected from topic of display 506 that cause-effect display 500 uses to arrange information to be displayed for the positions. Holdings that may be selected in topic of display 506 may include, by way of non-limiting example, stocks, options, commodities, bonds, futures, currencies, and derivatives. The holdings a user may select (e.g., bonds) coincide with linked topic information (e.g., Institution). The holdings a user may select may be broad (e.g., bonds) and linked topic information may be more narrow (e.g., one or more financial institutions). A user may use other identifiable relationships between topic and linked topic (e.g., bonds and options). Cause-effect display 500 may also include a date range section in which the user enters a start date and an end date the cause-effect display 500 may use to display short position information resulting from transactions that fall within the specified date range. Cause-effect display 500 may be configured to not show clients of the financial institution in global panel 504, topic of display 506, and linked topic 508. Cause-effect display 500 may be configured to only show short position information affiliated with the financial institution in global panel 504, topic of display 506, and linked topic 508.

Cause-effect display 500 displays positions in an order arranged on topic of display 506. Cause-effect display 500 provides a node-based GUI mechanism 510 the user may use to arrange the short position information and the short position information causal relationships based on any topic contained in cause-effect display 500 or any other information. For example, node-based GUI mechanism 510 may be used to show cause-effect relationships between position, holdings and liquidity.

Cause-effect display 500 includes a graphical representation 512 of the quantity of shorted shares that have been executed at the node, an alert 514 that displays the aggregated short positions that exceeded the required threshold or metrics at a particular node, and a causal relationship 516 that displays the causal relationships between nodes. Cause-effect display 500 includes metrics 518 that display performance measures such as thresholds level, liquidity ratio, operational risks, returns predictability, position by holding, original value at risk, and a directive 520 that displays one or more factors that influence metrics and alerts for the short positions at the financial institution over a designated trading range. Cause-effect display 500 provides the user the option to screen for detail by groups of topics and/or subgroups. The holding type(s) a user may select (e.g., holdings) coincides with linked topic information (e.g., stocks). The holdings selected by the user may be broad (e.g., liquidity) and linked topic information may be more narrow. Cause-effect display 500 includes a date range section in which a user may enter a start date and an end date used to display short position information resulting from transactions that fall within the specified date range. Cause-effect display 500 may be configured to not show clients of the financial institution in alert 514, causal relationship 516, metrics 518, and directive 520. Cause-effect display 500 may be configured to only show short position information affiliated with the financial institution in alert 514, causal relationship 516, metrics 518, and directive 520.

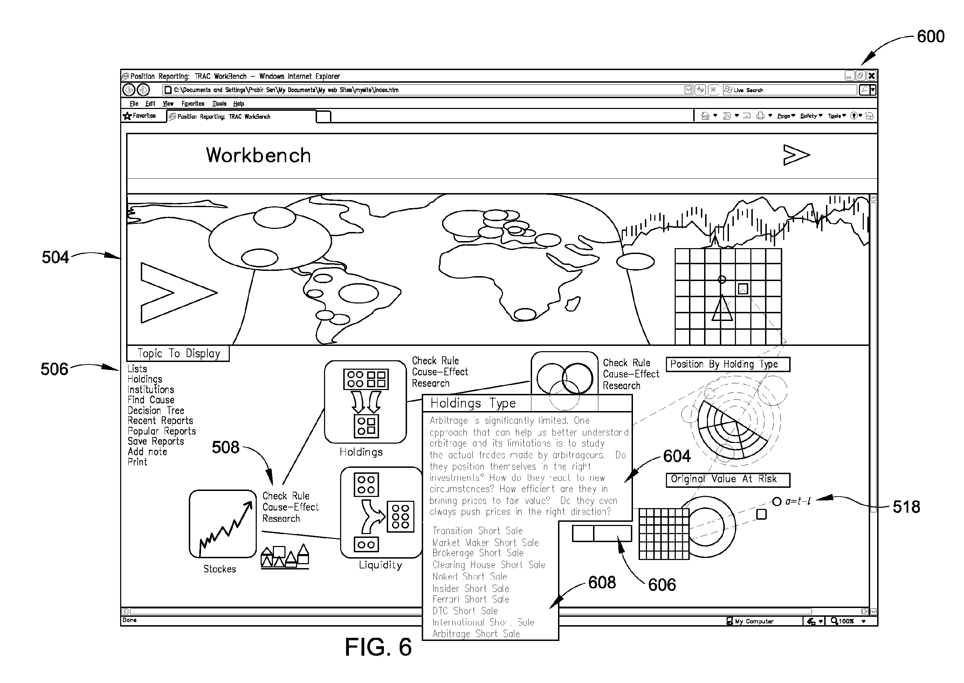

Figure 6 shows a cause-effect display 600 of short positions within and between holding types. Cause-effect display 600 displays short position information in an order arranged using a different starting node. Cause-effect display 600 provides a node-based GUI mechanism 602 (e.g., similar to the node-based GUI mechanism 510, however using a different variable such as options) that displays a topic for which short position information is arranged and provided. For example, node-based GUI mechanism 602 may be used to show cause-effect relationships between stocks, holdings, liquidity, and options. Internal inclusion and exclusion rule engine 222 retrieves short position information from base (position) 212 and rejection/exception 218 and aggregates the information by topic and linked topic for presentation via cause-effect display 600. Cause-effect display 600 also includes an elaborated linked-topic 604 that provides a detailed description and/or explanation for each linked topic 508. Cause-effect display 600 also includes a search 606 feature the user may use to search for information for a node. Cause-effect display 600 includes related topics to display 608 (e.g., short selling strategies) for a node that the financial institution used on a user configurable number of prior trading days (e.g., the last three prior trading days). Elaborated linked-topic 604 may display a detailed description for a related topic displayed by the related topics to display 608. Related topics to display 608 short selling strategies may include traditional short sale, market maker short sale, brokerage short sale, clearing house short sale, naked short sale, insider short sale, Ferran short sale, DTC short sale, international short sale, arbitrage short sale, street stock short sale, MIDI short sale, depository receipt short sale, Rockford short sale, tax haven short sale, lost certificate short sale, margined short sale, takeover short sale, attrition short sale, counterfeit stock short sale, issue depository receipts, warrant or option short sale, reg. S short sale, and lending short sale. Cause-effect display 600 may display the positions in an order arranged by the topic of display 506. Cause-effect display 600 uses a node-based GUI mechanism 510 and/or 602 which the user may use to arrange the short position information based on any field contained in cause-effect display 600 or any other information. Cause-effect display 600 may be configured to not show clients of the financial institution. Cause-effect display 600 may be configured to only show aggregated short position information affiliated with the financial institution.

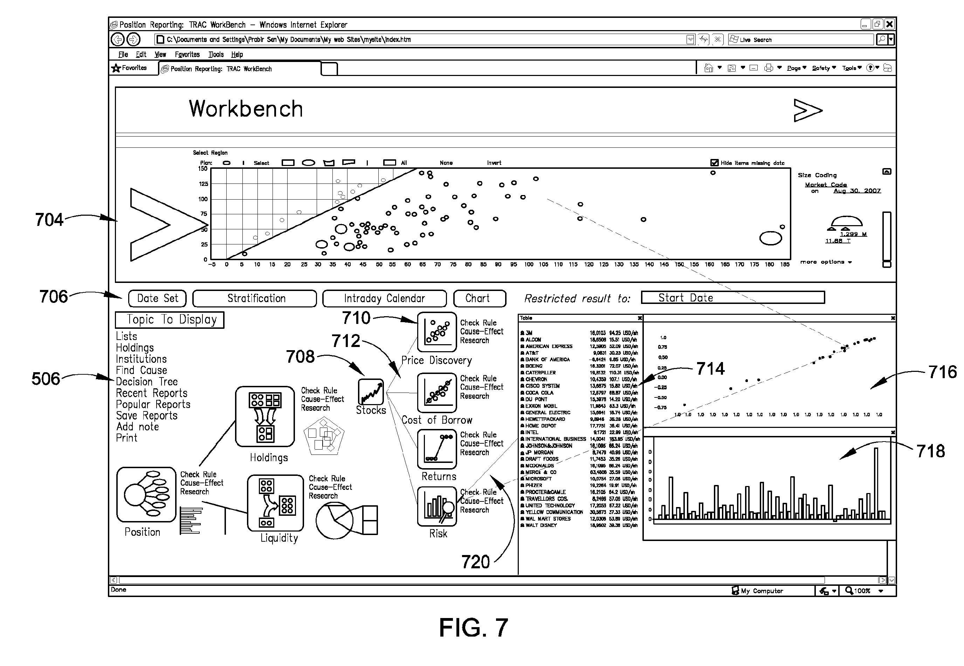

Figure 7 shows a cause-effect display 700 of short position, analytics and process metrics. Cause-effect display 700 includes a node panel 704 that displays graphical and/or table representations of detailed short information from base (position) 212 and rejection/exception 218 by selected holdings for one or more user selected topic. For example, node panel 704 may graphically display implied volatility versus historical volatility. Cause-effect display 700 also includes a sub-node 708 (e.g., stocks, price discovery, cost of borrow, returns, and risk) that displays the aggregated short position information of that sub-topic, sub-node metrics 710 that displays performance measures on short position such as thresholds levels, liquidity ratio, operational risks, and returns predictability of that particular sub-topic. Cause-effect display 700 also includes a sub-relationship 712 that displays the causal relationship between sub-nodes and sub-node metrics, and a sub-directive 720 (e.g., check rule cause-effect research for risk, display in a scatter-plot panel 716, and node panel 704) that displays one or more factors that influence sub-metrics and alerts at the sub-node for the short positions at the financial institution over a designated trading range. For example, in order for cause-effect display 700 to display detailed information regarding the short position holdings for stocks for a sector, the user may select "stocks" node 708 that corresponds to the particular topic. Similarly, in order for cause-effect display 700 to display detailed information regarding the settled short activity for a sector, the user may select "price discovery" metrics 710 that corresponds to the particular sub-topic. Node panel 704 provides detailed sector and client-based short-position information that includes variables and metrics for each position relevant to the report for the user. Cause-effect display 700 may be configured to not show clients of the financial institution in sub-node 708, sub-sub node 710 and sub-causal relationships 712. Cause-effect display 700 may be configured to only show aggregated short position information affiliated with the financial institution.

Cause-effect display 700 includes a user selectable data selection boxes 706 that may include data-set, stratification, intraday period and chart types of short position information that identify the topic concentration information desired by the user. Cause-effect display 700 also includes a list panel 714 that displays a list of the largest positions (e.g., the number of the largest positions may be configurable to display the twenty five largest positions) in which the user has a short position, sorted by the aggregate market value of the positions in the users account. Cause-effect display 700 also includes a scatter-plot panel 716 that displays the distribution of portfolios that topic concentrations represent, and for comparison purposes, cause-effect display 700 also includes a bar-chart panel 718 that displays the aggregate market value that the topic represents of the financial institution's settled short positions and recent short trading activity including the percentage such amounts represent of the total settled shorts and short sales recently executed at the financial institution. Cause-effect display 500 may be configured to not show clients of the financial institution in list panel 716, scatter-plot panel 716 and bar-chart panel 718. Cause-effect display 500 may be configured to only show aggregated short position information affiliated with the financial institution.

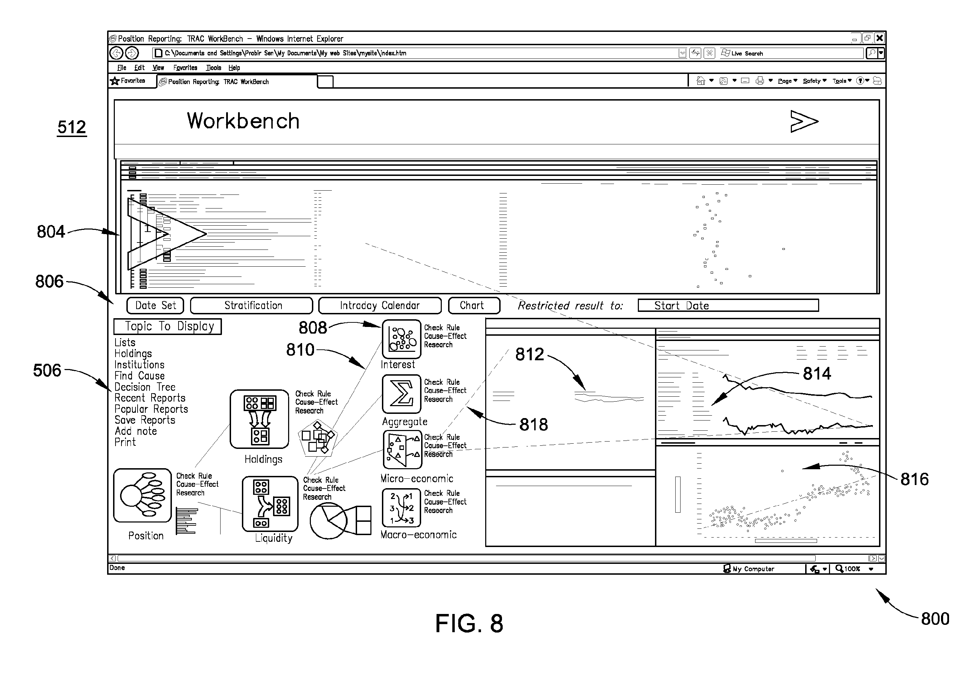

Figure 8 shows a cause-effect display 800 of short position, analytics and impact metrics. Cause-effect display 800 displays liquidity with the short position activity over the period indicated in terms of purchases to cover outstanding short sales, proprietary trading activity and customer trading activity. Cause-effect display 800 displays a detailed node with topics related to liquidity on short position information. Cause-effect display 800 includes alternate node panel 804 that displays graphical and/or table representations of detailed short information from base (position) 212 and rejection/exception 218 by selected holdings for one or more user selected alternate topics. Cause-effect display 800 also includes sub-node liquidity metrics 808 that displays performance measures on liquidity such as interests, aggregate, micro-economic determinants and macro-economic determinants of that particular sub-topic, a sub-causal-relationship 810 that displays the causal relationship between sub-nodes and sub-node liquidity metrics, and a sub-liquidity directive 818 that displays one or more factors that influence liquidity and alerts at the sub-node for the short position at the financial institution over a designated trading range. For example, in order for cause-effect display 800 to display detailed information regarding the short position holdings for stocks for a sector, the user may select "interest" node 808 that corresponds to the topic. Alternate node panel 804 provides detailed topics and client-based short-position information for the user that includes variables and metrics for each position relevant for the report. Cause-effect display 800 may be configured to not show clients of the financial institution in sub-node 808 and sub-causal relationships 810. Cause-effect display 800 may be configured to only show aggregated short position information affiliated with the financial institution.

Cause-effect display 800 includes a user selectable data selection box 806 including data-set, stratification, intraday period and chart types of liquidity that identify the topic concentration information desired by the user. Cause-effect display 800 also includes a factor panel 812 that displays a list of the factors the system 102 analyzes for liquidity, in which the user has a short position, sorted by the aggregate market value of positions in the users account. Cause-effect display 800 includes an analytics panel 814 that displays the analysis, including forecasting and optimization of portfolios that topic concentrations represent, and for comparison purposes, cause-effect display 800 also includes a simulation panel 816 that displays aggregate liquidity exposure value the topic represents as a pre-emption of the financial institution's exposure to short positions and recent short trading activity including the percentage such amounts represent of the total settled shorts and short sales recently executed at the financial institution. Cause-effect display 800 may be configured to not show clients of the financial institution in factor panel 812, analytics panel 814 and simulation panel 718. Cause-effect display 800 may be configured to show only aggregated short position information affiliated with the financial institution.

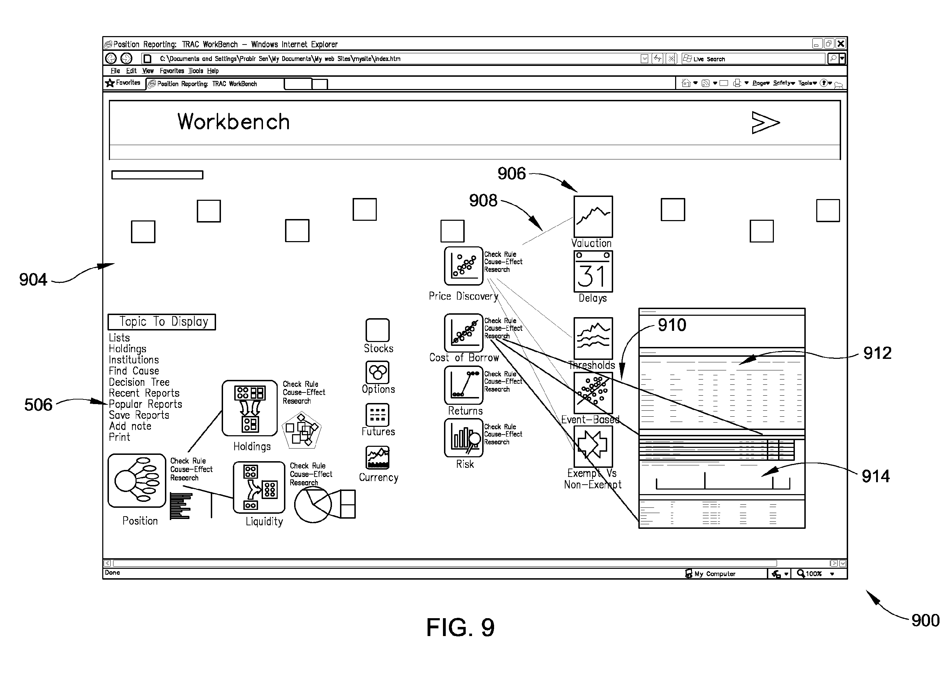

Figure 9 shows a cause-effect display 900 of a full/expanded cause-effect of a position. Cause-effect display 900 displays a fully-expanded cause-effect depicting the effect and change in the total short position for the financial institution. The back panel 904 is a detail report in units of time (e.g., seconds, minutes, hours, days, months, years) across which the short position information for a user specified period that system 102 analyzes on using various metrics and dimensions. The back panel 904 may display partitioned top-bottom spread, cumulative active returns, active return series, average number of names, active annualized return, annualized tracking error, annualized information ratio, annualized share PE ratio, T-stat on active return, average IC, IC T-stat, max drawdown percentage, average period buy turnover, active period volatility, and active period downside. The units of time include valuation, delays, thresholds, event-based, and exempt versus non-exempt. Front-panel 906 is broken down from the first node to the last node (e.g., position, holdings, liquidity, stocks, options, futures, currency, price discovery, cost of borrow, returns, risk, valuation, delays, thresholds, event-based, exempt versus non-exempt). The causal relationship 908 is broken down by the relationships between the nodes (e.g., price discovery and valuation) as determined by internal inclusion and exclusion rule engine 222 from the short information from base (position) 212 and rejection/exception 218. Cause-effect display 900 also includes a factor directive 910 that displays an indicator of the factor caused or the effect of the short position, a table panel 912 that displays the lowest possible detailed aggregated short-position information, and a board panel 914 that includes panels that display data and graphs by factors, metrics, and dimensions used in algorithms of selected short information reports. For example, when the user selects the valuation button 906, the table panel 912 of cause-effect display 900 includes a valuation of short position information for each client of the financial institution within a time unit and each panel of board panel 914 includes one or more factors and metrics that indicate the short position and change in the total short position for the time unit.

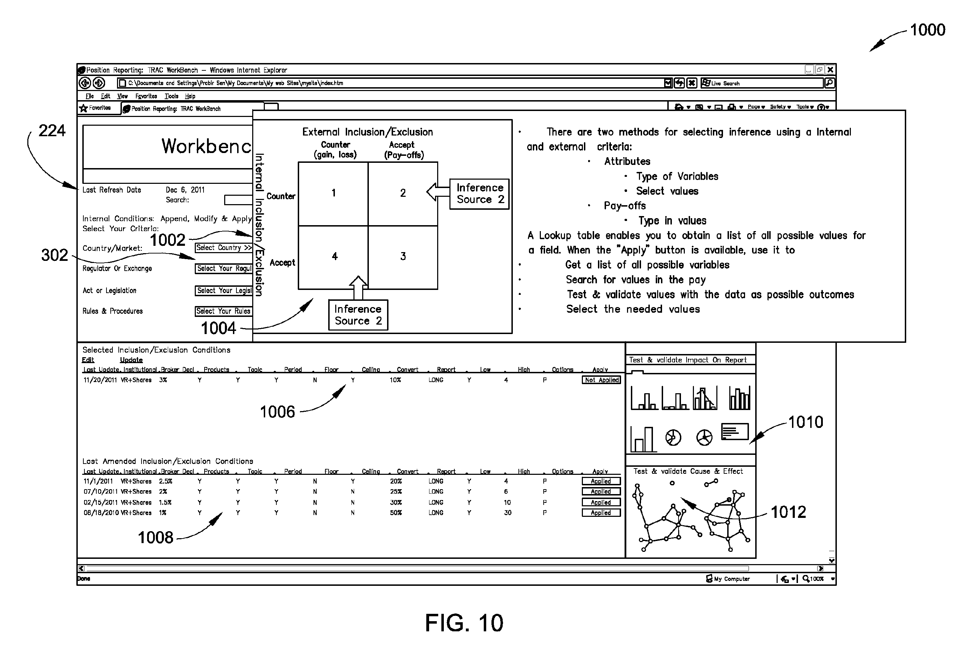

Figure 10 shows a rule exceptions display 1000 of edit and update rules as exceptions. Rule exceptions display 1000 may be displayed as a pop-up window 1002 that displays an evolutionary game theoretic algorithm 1004 that depicts an expected value of the short position for the holdings and expected pay-off between the financial institution and the user. Evolutionary game theoretic algorithm 1004 depicts internal inclusion / exclusion criteria (e.g., accept, counter) and external inclusion / exclusion criteria (counter gain/loss, accept pay-offs) that identify inference sources (e.g., inference source 1 and inference source 2). Rule exceptions display 1000 may perform the underlying process to draw inferences using an adaptive Bayesian quantum inference algorithm or quantum inference algorithm or both. Rule exceptions display 1000 may use parameters 1006 to display the aggregate short position information. Parameters 1006 may include history 1008 parameters for previous evolutionary algorithms and the adaptive Bayesian quantum inference algorithm stored in analytics engine 104 in units of time (e.g., seconds, minutes, hours, days, months, years) and in units representing risk and liquidity. Parameters 1006 include impacts on short position report information 1010 (e.g., previous) and cause-effect of short position information 1012 that trace out the individual short position of the aggregate short position for settled and/or unsettled short positions held by the financial institution for the time units selected. Rule exceptions display 1000 may not be shown to clients of the financial institution. Rule exceptions display 1000 may be configured to only show in order to configure system 102 affiliated with the financial institution. At least two methods may be used by a user to select inferences using internal and external criteria, including attributes (e.g., type of variables, select values), and pay-offs (e.g., type of values). A lookup table may enable a user to obtain a list of the possible values for a field and a list of possible variables, search for values in a payoff, test and validate values with data for possible outcomes, and select values.

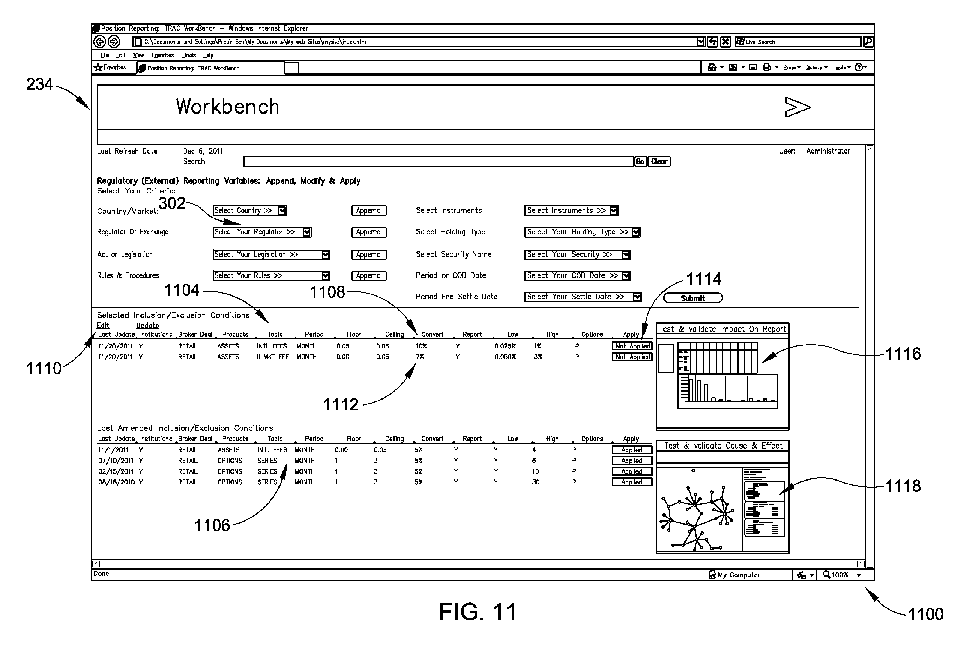

Figure 11 shows a selectable reporting variables display 1100. The user interface 234 displays external inclusion and exclusion rules associated with the positions included in a client portfolio based on share volume. User interface 234 may be presented by information data-mart 108. The short position information displayed in user interface 234 provides a set of criteria that may be specified by external inclusion and exclusion engine 232. User interface 234 may include a set of criteria (e.g., country, instruments, regulator, legislation), reporting variable box 1104 in which the user selects the short position information. When the user selects a set of short position information, external inclusion and exclusion engine 232 retrieves from internal position (A) 226 the rules not applied (e.g., and/or rules yet to be applied) and those rules that are previously applied 1106. User interface 234 may include fields for displaying a variety of rules related information including the attributes 1108 (e.g., inclusion and exclusion conditions including institutional, broker deal, products, topic, period, floor, ceiling, convert, report, low, high, options, apply) of the rules designated. User interface 234 provides the user an edit/update 1110 option to modify the rule associated with each of the positions using a parameterized field for displaying the parameters for each attribute of the rule designated as parameter 1112. User interface 234 may include an indicator field 1114 that indicates whether the rule attribute was applied or not applied. External inclusion and exclusion regulatory rule engine 232 receives the rules for each position from a rule book source 210 (e.g., real-time rule book source) to automatically identify the rules for inclusion in user interface 234.

User interface 234 may include includes a report of charts and descriptions for impacts on short position report information 1116. Impacts on short position report information 1116 may show test and validation results for various metrics such as thresholds level, liquidity ratio, operational risks, and returns predictability. Impacts on short position report information 1116 may show test and validation results when a rule is applied to short position information stored in the internal position (A) 226 and rejection/exception 218 for each user, and the change in the short balance between those time periods for the short positions. Impacts on short position report information 1116 displays metrics for all or a portion of short position information for a financial institution, or metrics for all or a portion of short positions aggregated from multiple financial institutions. As changes occur to attribute, parameter and the indicator of external inclusion and exclusion regulatory rule engine 232, the impacts on short position report information 1116 displays the change results to user affiliated with the financial institution.

User interface 234 may also include diagrams and descriptions displaying the impact on cause-effect of short position information 1118. Impact on cause-effect of short position information 1118 may show test and validation results for the cause-effect of short positions as the user changes the attributes of the rules applied to the short position information stored in the internal position (A) 226 and rejection/exception 218, for each user, and the change in the short balance between the time periods for the short positions. Impact on cause-effect of short position information 1118 displays cause-effect for all or a portion of short position information for a financial institution or all or a portion of short positions aggregated from multiple financial institutions. As changes occur to attribute, parameter and indicator of external inclusion and exclusion rule engine 232, the impact on cause-effect of short position information 1118 displays the change results to users affiliated with the financial institution.

User interface 234 displays the applied rules in an order according to the change between multiple recent time periods. User interface 234 may provide a GUI mechanism the user may use to sort the positions based on one or more rule attributes or any other attribute information. Furthermore, the information provided in user interface 234 may include information representative of an absolute change (increase/decrease), a percentage change or a rate of change in the parameter represented by the particular attribute field. The information provided in the user interface 234 may be sorted and displayed based on the information in one or more of the provided fields.

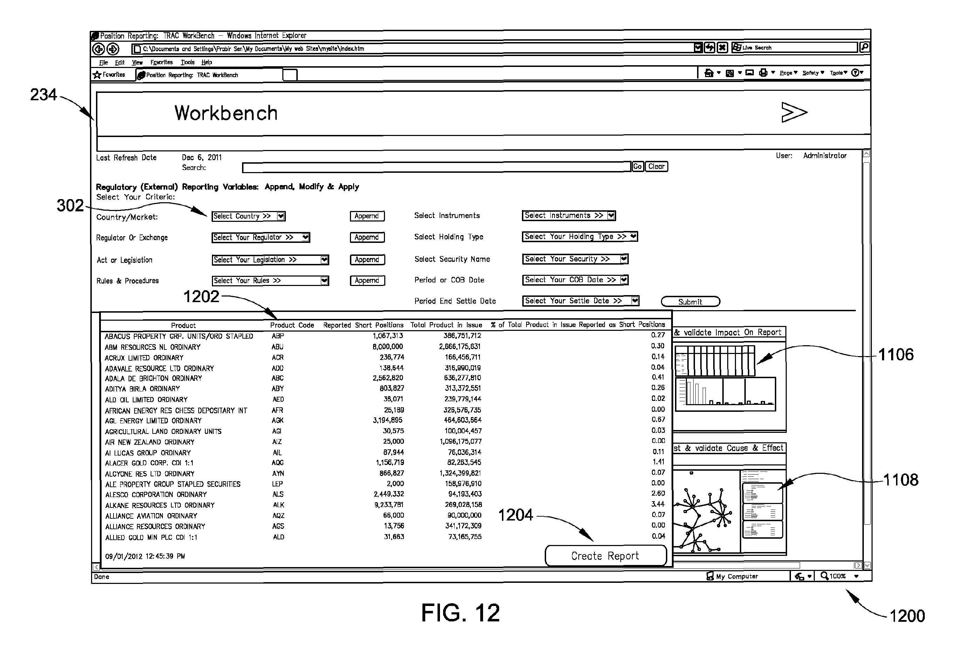

Figure 12 shows a summary report 1200 of a regulator's portfolio. Report 1202 summarizes the detailed short position by holding types as per regulatory and/or user requirements in various markets (e.g., report by product, product code, number of reported short positions, total product in issue, and percentage of total product in issue reported as short positions). Report 1202 may includes upper and lower thresholds that provide similar information for the positions that have experienced the largest short position over a user configurable number of prior trading days (e.g., the last three prior trading days) across various trading strategies including, for example, depository trust companies, convertible arbitrage, directional and risk arbitrage. Report 1202 also includes a user selectable create report 1204 that generates reports in one or more formats designated by the destination and/or requestor, and may connect to the destination and/or requestor system (e.g., logs into user system) and uploads the reports to the destination and/or requestor system. System 102 may configure report 1202 to not be shown to clients of the financial institution, and System 102 may configure create report 1204 to only be shown to configure the System 102 affiliated with the financial institution.

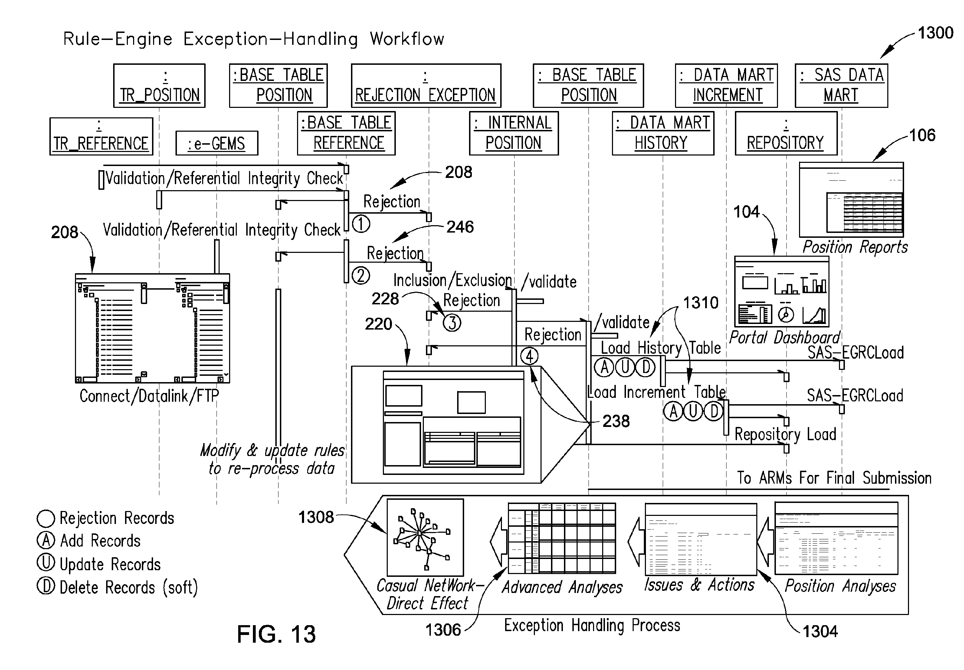

Figure 13 shows a workflow 1300 to apply regulatory changes, inclusion/exclusion rule changes and strategy on changes. Workflow 1300 of an exception processor (e.g., 230) shows the processing that may occur for short position information to maintain traceability and auditability. Workflow 1300 shows states and/or exceptions that may occur when system 102 processes the short position information including integration 208 that displays position information that failed in the data validation process 206, referential 246 that displays position information that failed in referential integrity process 216, internal 228 that displays position information that failed in an attempt to apply internal inclusion and exclusion rules 222, and external 238 that displays position information that failed in an attempt to apply external inclusion and exclusion rules 232. Workflow 1300 states and/or exceptions may include reference, position, e-GEMs, base table position, base table reference, rejection exception, internal position, base external position, data mart history, data mart increment, repository, and SAS data mart. The states criteria, conditions, measuring values, attributes, step-by-step actions and parameters determine whether a transaction record is "accepted" for further processing or "rejected" for further processing. Workflow 1300 includes a user interface view that lists the states and/or exceptions and allows the user to modify rules, parameters and values in order to re-process failed position information. Workflow 1300 includes issues and action list 1304 that lists the issues and allows the user to take actions to close issues in order to re-process failed position information. Workflow 1300 exception handling process includes performing position analysis, identifying issues and actions, performing advanced analysis, and generating a causal network that shows direct effect of positions. Workflow 1300 includes advanced analytics 1306 that provides the results of applied mathematical and statistical models and algorithms, and allows the user to modify applied mathematical and statistical models and algorithms in order to re-process failed position information. Workflow 1300 includes cause-effect analyses 1308 that displays the cause and effect, and allows the user to a take course of action to modify a position in order to re-process failed position information. Workflow 1300 includes a workflow process 244 to flag records 1310 as add, update or delete record before loading the data to the data mart 108.

The workflow 1300 shows that additional information may also be included in exception report 220. For example, news stories relating to a particular heavily traded position may be included in exception report 220 and associated with that news story may include short trend information or any other suitable analysis related to the position. Exception report 220 may include a rating for each listed position indicating the likelihood that the position may undergo a recall from the lenders of the position. Exception report 220 does not provide the particular rating for each position to clients of the financial institution, but may sort the positions listed in the report 220 based on the rating information.

Although a number of displays (e.g., screenshots), rule determinants, cause-effect and reports presenting various types of short position information have been described, other short position information may include screenshots showing the largest/smallest percentage change in positions that have been sold short at the financial institution and/or positions that are available for borrow, respectively, an indicator of positions that are subject to internal and external rules (e.g., short sales subject to close out per regulation) and long positions holdings of the financial institution may be interested in borrowing to comply with positions regulations. Additional types of short position information may also be presented in other suitable mathematical and statistical representations including, heat-maps, pie, graphs and charts. The system 102 may also be used to review, manipulate, and arrange information by one or more position types, strategies, transaction types and/or by one or more nodes indicated in one or more of the displays (e.g., screenshots) described above. For example, information may be arranged so that system 102 displays only proprietary trades (e.g., those performed on behalf of the financial institution) sorted by topic.

System 102 may use stochastic functionality including forecasting indications of significant activity in user-specified positions and/or topics (e.g., emerging alerts). In addition, system 102 may provide and/or employ multiple types of mathematics and statistics applied on the information aggregated using the system, including the short position reporting metrics and/or the cost to borrow for a position versus the short position in the position, the higher value of short position reporting metrics or the minimized cost to borrow for a particular position versus the short position in the particular position.

System 102 may provide optimization functionality to the user, including optimizing operational processes of significant activity in user-specified positions and/or topics (e.g., quicker processing and/or improved performance).

System 102 may provide the user a way to configure the system to apply internal and external rules, rule determinants, cause-effect and report generation about one or more positions (e.g., provide the system with a watch thresholds) and receive trend analysis based thereon. The user may also request that the aggregated information be exported to an external system specified by the user for additional reporting, investigation and/or manipulation. The system 102 may be further used to more efficiently coordinate various regulatory requirements applicable to executing short sales. As such, upon the request of the user, system 102 may be incorporated or combined into other technical systems that allow the user to execute a rule and/or cause-effect function that determines whether a particular position is reportable and downstream impact information to the user, and thereby facilitate the governance and compliance of a short sale in the position. Additionally, the system 102 may be used to assemble/accumulate mathematical and statistical algorithms and data upon user requests.

The short position information aggregated in short position information data-mart 108 may also be used as a data source for various position strategies that rely on short position information. Furthermore, the system 102 may be used to aggregate and arrange information regarding one or more holding types of position, transactions and/or trading strategies such as various transaction statistics and data for fixed income positions, single stock futures and derivative transactions.

Accordingly, a system and method is provided for detecting short positions, determining rules, applying rules, identifying cause-effect and generating short position information report. System 102 applies rules, determines rules, identifies cause-effect and generates short position information report. System 102 arranges the short position information by internal inclusion and exclusion rule engine 222 according to certain rule criteria. Upon receiving a request from a user, system 102 formats the information and presents the information in a form reported to the user for governance and compliance decisions.

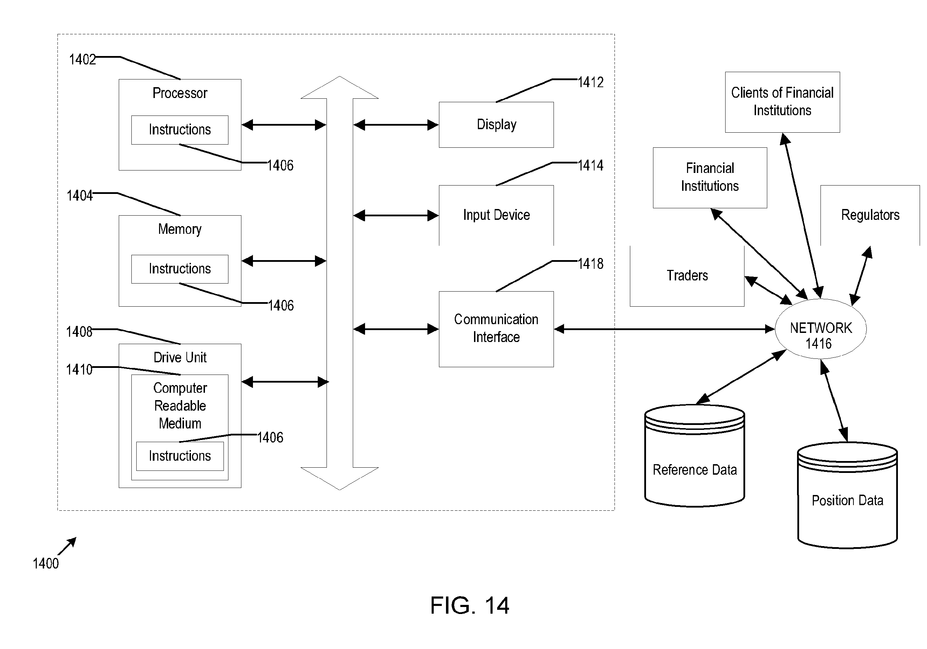

Figure 14 shows a DCRD system configuration 1400. The system may be deployed as a general computer system used in a networked deployment. The computer system may operate in the capacity of a server or as a client user computer in a server-client user network environment, or as a peer computer system in a peer-to-peer (or distributed) network environment. The computer system may also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system may be implemented using electronic devices that provide voice, video or data communication. Further, while a single computer system may be illustrated, the term "system" shall also be taken to include any collection of systems or sub-systems that individually or jointly execute a set, or multiple sets, of instructions to perform one or more computer functions.

The computer system may include a processor 1402, such as, a central processing unit (CPU), a graphics processing unit (GPU), or both. The processor may be a component in a variety of systems. For example, the processor may be part of a standard personal computer or a workstation. The processor may be one or more general processors, digital signal processors, application specific integrated circuits, field programmable gate arrays, servers, networks, digital circuits, analog circuits, combinations thereof, or other now known or later developed devices for analyzing and processing data. The processors and memories discussed herein, as well as the claims below, may be embodied in and implemented in one or multiple physical chips or circuit combinations. The processor may execute a software program, such as code generated manually (i.e., programmed).

The computer system may include a memory 1404 that can communicate via a bus. The memory may be a main memory, a static memory, or a dynamic memory. The memory may include, but may not be limited to computer readable 1420 storage media such as various types of volatile and non-volatile storage media, including random access memory, read-only memory, programmable read-only memory, electrically programmable read-only memory, electrically erasable read-only memory, flash memory, magnetic tape or disk, optical media and the like. In one case, the memory may include a cache or random access memory for the processor. Alternatively or in addition, the memory may be separate from the processor, such as a cache memory of a processor, the memory, or other memory. The memory may be an external storage device or database for storing data. Examples may include a hard drive, compact disc ("CD"), digital video disc ("DVD"), memory card, memory stick, floppy disc, universal serial bus ("USB") memory device, or any other device operative to store data. The memory may be operable to store instructions 1406 executable by the processor. The functions, acts or tasks illustrated in the figures or described herein may be performed by the programmed processor executing the instructions stored in the memory. The functions, acts or tasks may be independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

The computer system may further include a display 1422, such as a liquid crystal display (LCD), an organic light emitting diode (OLED), a flat panel display, a solid state display, a cathode ray tube (CRT), a projector, a printer or other now known or later developed display device for outputting determined information. The display may act as an interface for the user to see the functioning of the processor, or specifically as an interface with the software stored in the memory or in the drive unit 1408.

Additionally, the computer system may include an input device 1424 configured to allow a user to interact with any of the components of system. The input device may be a number pad, a keyboard, or a cursor control device, such as a mouse, or a joystick, touch screen display, remote control or any other device operative to interact with the system.

The computer system may also include a disk or optical drive unit. The disk drive unit may include a computer-readable medium in which one or more sets of instructions (e.g., software may be embedded). Further, the instructions may perform one or more of the methods or logic as described herein. The instructions may reside completely, or at least partially, within the memory and/or within the processor during execution by the computer system. The memory and the processor also may include computer-readable media as discussed above.

The present disclosure contemplates a computer-readable medium that includes instructions or receives and executes instructions responsive to a propagated signal, so that a device connected to a network 1426 may communicate voice, video, audio, images or any other data over the network. Further, the instructions may be transmitted or received over the network via a communication interface 1428. The communication interface may be a part of the processor or may be a separate component. The communication interface may be created in software or may be a physical connection in hardware. The communication interface may be configured to connect with a network, external media, the display, or any other components in system, or combinations thereof. The connection with the network may be a physical connection, such as a wired Ethernet connection or may be established wirelessly as discussed below. Likewise, the additional connections with other components of the system may be physical connections or may be established wirelessly. In the case of a service provider server, the service provider server may communicate with users through the communication interface.

The network may include wired networks, wireless networks, or combinations thereof. The wireless network may be a cellular telephone network, an 804.11, 804.16, 804.20, or WiMax network. Further, the network may be a public network, such as the Internet, a private network, such as an intranet, or combinations thereof, and may utilize a variety of networking protocols now available or later developed including, TCP/IP based networking protocols.

The computer-readable medium may be a single medium, or the computer-readable medium may be a single medium or multiple media, such as a centralized or distributed database, and/or associated caches and servers that store one or more sets of instructions. The term "computer-readable medium" may also include any medium that may be capable of storing, encoding or carrying a set of instructions for execution by a processor or that may cause a computer system to perform any one or more of the methods or operations disclosed herein.

The computer-readable medium may include a solid-state memory such as a memory card or other package that houses one or more non-volatile read-only memories. The computer-readable medium also may be a random access memory or other volatile re-writable memory. Additionally, the computer-readable medium may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that may be a tangible storage medium. The computer-readable medium is preferably a tangible storage medium. Accordingly, the disclosure may be considered to include any one or more of a computer-readable medium or a distribution medium and other equivalents and successor media, in which data or instructions may be stored.

Alternatively or in addition, dedicated hardware implementations, such as application specific integrated circuits, programmable logic arrays and other hardware devices, may be constructed to implement one or more of the methods described herein. Applications that may include the apparatus and systems of various embodiments may broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system may encompass software, firmware, and hardware implementations.

The methods described herein may be implemented by software programs executable by a computer system. Further, implementations may include distributed processing, component/object distributed processing, and parallel processing. Alternatively or in addition, virtual computer system processing maybe constructed to implement one or more of the methods or functionality as described herein.

Although components and functions are described that may be implemented in particular embodiments with reference to particular standards and protocols, the components and functions are not limited to such standards and protocols. For example, standards for Internet and other packet switched network transmission (e.g., TCP/IP, UDP/IP, HTML, and HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

The illustrations described herein are intended to provide a general understanding of the structure of various embodiments. The illustrations are not intended to serve as a complete description of all of the elements and features of apparatus, processors, and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

The above disclosed subject matter is to be considered illustrative, and not restrictive, and the appended claims are intended to cover all such modifications, enhancements, and other embodiments, which fall within the true spirit and scope of the description. Thus, to the maximum extent allowed by law, the scope is to be determined by the broadest permissible interpretation of the following claims and their equivalents, and shall not be restricted or limited by the foregoing detailed description.

## Claims

1. A computer-implemented method for reporting short position information, the method comprising:
receiving position information from one or more data sources, wherein the position information identifies positions of one or more holding types, wherein the positions are from one or more entities including one or more clients of one or more financial institutions, or the one or more financial institutions, or both;
detecting a short position from the position information, wherein the short position comprises levels of thresholds;
identifying cause and effect of the short position using the position information;
determining inclusion and exclusion rules comprising rule criteria;
applying the inclusion and exclusion rules to the position information;
arranging the short position information for analyzing reporting metrics;
testing impact on short position reports in relation to the rules; and
validating the short position reports according to one or more of the rule criteria.

2. The method of claim 1, wherein the holding types are from a group comprising: a short position in a price discovery process, and for which trading activity makes prices more informationally efficient.

3. The method of claim 1, wherein the holding types are from a group comprising: a short position in a cost-to-borrow, wherein the cost-to-borrow indicates a cost associated with borrowing money for the short position and the level of thresholds of the short position.

4. The method of claim 1, wherein the holding types are from a group comprising: a short position in a return predictability, wherein the return predictability indicates a return associated with the short position and the level of thresholds for the short position.

5. The method of claim 1, wherein the holding types are from a group comprising: a short position in a risk valuation, wherein the risk valuation indicates risks associated with the short position, and value risks and the levels of thresholds for the short position.

6. The method of claim 1, wherein the levels of thresholds for the short position range from 0.001 % to 99.999%.

7. The method of claim 1, wherein the number of the one or more entities range from 2 to 20, and wherein the levels of thresholds for the short position range from 0.001 % to 99.999%.

8. The method of claim 1, wherein the identified cause of the short position is causal arbitrage activity of short sellers, wherein the causal arbitrage activity results in faster incorporation of information into prices, cost, return and risks, and wherein the causal arbitrage activity attenuates drift or eliminates drift, and supports a positive role of short sellers in promoting efficiency.

9. The method of claim 1, wherein the short position is a short-sale position in one or more of the holding types, wherein the identified effect is of the short-sale position and effects liquidity and aggregates micro and macro-economic indicators recognized by governance, compliance, regulators market participants, and independent third parties pertaining to the one or more of the holding types.

10. The method of claim 8, wherein the identified cause of the short position includes security types, trading strategies and transaction types.

11. The method of claim 9, wherein the position information includes one or more metrics effected, wherein the one or more metrics effected pertain to the one or more of positions.

12. The method of claim 1, the method further comprising:
reporting the arranged short position information according to one or more report criteria, wherein the one or more report criteria includes by topic of display.

13. The method of claim 1, the method further comprising:
reporting the arranged short position information according to one or more selection criteria, wherein the one or more selection criteria includes by sub-topic.

14. The method of claim 1, the method further comprising:
reporting the arranged short position information according to one or more selection criteria, wherein the one or more selection criteria includes by causal relationships.

15. The method of claim 1, the method further comprising:
reporting the arranged short position information according to one or more selection criteria, wherein the one or more selection criteria includes by sub-relationships

16. The method of claim 1, wherein the one or more selection criteria includes by directives.

17. The method of claim 1, the method further comprising:
determining the inclusion and exclusion rules of the short position information according to one or more rule criteria, wherein the one or more rule criteria includes one or more attributes.

18. The method of claim 1, the method further comprising:
determining the inclusion and exclusion rules of the short position information according to one or more rule criteria, wherein the one or more rule criteria includes one or more parameters.

19. The method of claim 1, the method further comprising:
determining the inclusion and exclusion rules of the short position information according to one or more rule criteria, wherein the one or more rule criteria includes an indicator.

20. The method of claim 1, the method further comprising:
determining the inclusion and exclusion rules according to the one or more rule criteria, wherein the one or more rule criteria includes one or more metrics.

21. The method of claim 1, wherein the one or more rule criteria includes one or more metrics.

22. A system for presenting short position associated with one or more holding types, the system comprising:
a short position data-mart ("data-mart") for receiving short position information and regulatory rules, using a communications interface, from one or more sources;
a rule processing engine in communication with the data-mart, the rule processing engine operable to:
determine rules to apply to the short position information, in order to present the short position information according to one or more rule criteria;
test and validate the rules by modifying a portion of the short position information associated with the one or more holding types to determine whether a portion of a short sale position is attributable to changes in the rules;
apply the rules to the short position information.

23. The system of claim 22, further comprising:
a cause-effect processor, in communication with the data-mart, operable to apply methods on the short position information, wherein the short position information is arranged according to one or more causal criteria;
wherein the rule engine modifies a portion of the short position information associated with the cause-effect on one or more of the holding types when the portion of the short position is attributable to changes in the cause-effect.

24. The system of claim 22, further comprising:
a filtering engine operable to remove a portion of the short-sale position information associated with the one or more holding types when the portion of the short sale position information is attributable to a pre-determined report criteria;
a reporting engine operable to generate reports comprising the short position information including the short sale position.

25. A computer-implemented method for reporting object information, the method comprising:
receiving information from one or more data sources, wherein the information identifies objects of one or more object types, wherein the objects are from one or more sources including one or more clients of one or more service providers, or the one or more service providers, or both;
detecting an object from the information, wherein the object comprises levels of thresholds;
identifying cause and effect of the object using the information;
determining inclusion and exclusion rules comprising rule criteria;
applying the inclusion and exclusion rules to the information;
arranging the object information for analyzing reporting metrics;
testing impact on the object reports in relation to the rules; and
validating the object reports according to one or more of the rule criteria.
